# FASCICULE DE BREVET EUROPEEN

(11) **EP 3 076 535 B1**
(45) Date de publication et mention de la délivrance du brevet: **27.06.2018**
(21) Numéro de dépôt: 16161749.3
(22) Date de dépôt: 22.03.2016
(51) Int. Cl.: H02M 1/32, H02M 3/07, H02M 7/483, G11C 5/14

(54) **CONVERTISSEUR DC-DC**
GLEICHSTROM-GLEICHSTROMWANDLER
DC-DC CONVERTER

(30) Priorité: 24.03.2015 FR 1552451
(43) Date de publication de la demande: 05.10.2016
(73) Titulaire: COMMISSARIAT À L'ÉNERGIE ATOMIQUE ET AUX ÉNERGIES ALTERNATIVES, 75015 Paris (FR)
(72) Inventeur: PILLONNET, Gaël, 38360 SASSENAGE (FR)
(74) Mandataire: Cabinet Beaumont

(56) Documents cités:
- FR-A1- 2 835 116
- US-A1- 2004 046 603
- US-A1- 2014 029 346

## Description

### Domaine

La présente demande concerne le domaine des circuits d'alimentation, et, plus généralement, des circuits de conversion continu-continu, ou convertisseurs DC-DC.

### Exposé de l'art antérieur

Dans de nombreuses applications, par exemple pour alimenter un dispositif électronique, ou une partie d'un dispositif électronique, il est nécessaire de convertir une tension d'entrée continue en une tension de sortie continue de niveau différent au moyen d'un convertisseur DC-DC.

On s'intéresse ici plus particulièrement aux convertisseurs DC-DC utilisant des commutateurs et des éléments passifs de stockage d'énergie, par exemple des capacités ou des inductances.

Plus particulièrement, on s'intéresse ici aux convertisseurs DC-DC multi-cellules, c'est-à-dire comportant une pluralité de cellules élémentaires de conversion identiques ou similaires connectées en parallèle ou en série entre des bornes d'entrée et des bornes de sortie du convertisseur.

Il existe un besoin pour un convertisseur DC-DC multi-cellules palliant au moins en partie certains inconvénients des convertisseurs DC-DC multi-cellules connus. Les documents FR2835116, US2014/029346 et US2004/046603 font partie de l'art antérieur pour la présente demande.

### Résumé

Ainsi, un mode de réalisation prévoit un convertisseur DC-DC comportant : une pluralité de cellules de conversion connectées en parallèle et/ou en série, chaque cellule comportant au moins un commutateur et au moins un élément passif de stockage d'énergie ; et un circuit de diagnostic adapté à tester individuellement les cellules en vue de détecter d'éventuelles cellules défectueuses, à désactiver les cellules défectueuses, et à mémoriser l'emplacement des cellules défectueuses.

Selon un mode de réalisation, pour tester une cellule, le circuit de diagnostic mesure la tension de sortie de la cellule et la compare à une tension de sortie attendue.

Selon un mode de réalisation, pour tester une cellule, le circuit de diagnostic mesure le rendement de conversion de la cellule et le compare à un rendement de conversion attendu.

Selon un mode de réalisation, pour tester une cellule, le circuit de diagnostic mesure le taux d'oscillation de sortie de la cellule, et le compare à un taux d'oscillation de sortie attendu.

Selon un mode de réalisation, chaque cellule comprend un circuit interne de contrôle dudit au moins un commutateur de la cellule, ce circuit étant cadencé par un signal d'horloge fourni par un circuit de contrôle global du convertisseur.

Selon un mode de réalisation, les signaux d'horloge appliqués aux circuits de contrôle interne des différentes cellules sont déphasés.

Selon un mode de réalisation, le circuit de contrôle global est adapté, lorsque des cellules défectueuses sont désactivées par le circuit de diagnostic, à reconfigurer les déphasages des signaux d'horloge appliqués aux circuits de contrôle interne des cellules encore actives.

Selon un mode de réalisation, le circuit de diagnostic comprend une mémoire non volatile.

Selon un mode de réalisation, l'élément de stockage d'énergie est une capacité ou une inductance.

Selon un mode de réalisation, le commutateur est un transistor MOS.

Selon un mode de réalisation, chaque cellule comprend une pompe de charge capacitive.

Selon un mode de réalisation, les cellules et le circuit de diagnostic sont intégrés dans une même puce semiconductrice.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma électrique d'un exemple d'un convertisseur DC-DC multi-cellules ;
la figure 2 est un schéma électrique d'un exemple d'un mode de réalisation d'un convertisseur DC-DC multi-cellules ;
la figure 3 est un schéma électrique d'un exemple de réalisation d'un circuit de diagnostic du convertisseur de la figure 2 ;
la figure 4 est un schéma électrique d'un exemple d'une cellule élémentaire d'un convertisseur DC-DC multi-cellules selon un mode de réalisation ; et
la figure 5 est un schéma électrique simplifié d'un autre exemple d'un mode de réalisation d'un convertisseur DC-DC multi-cellules.

### Description détaillée

De mêmes éléments ont été désignés par de mêmes références aux différentes figures. Par souci de clarté, seuls les éléments qui sont utiles à la compréhension des modes de réalisation décrits ont été représentés et sont détaillés. En particulier, les circuits de contrôle utilisés dans les convertisseurs DC-DC multi-cellules pour commander les différentes cellules élémentaires de conversion n'ont pas été détaillés, les modes de réalisation décrits étant compatibles avec les circuits de contrôle usuellement utilisés dans de tels convertisseurs. Sauf précision contraire, les expressions "approximativement", "sensiblement", et "de l'ordre de" signifient à 10 % près, de préférence à 5 % près. Par ailleurs, le terme "connecté" désigne une liaison électrique directe, sans composant électronique intermédiaire, par exemple au moyen d'une ou plusieurs pistes conductrices, et le terme "couplé" ou le terme "relié", désigne soit une liaison électrique directe (signifiant alors "connecté") soit une liaison via un ou plusieurs composants intermédiaires (résistance, condensateur, etc.).

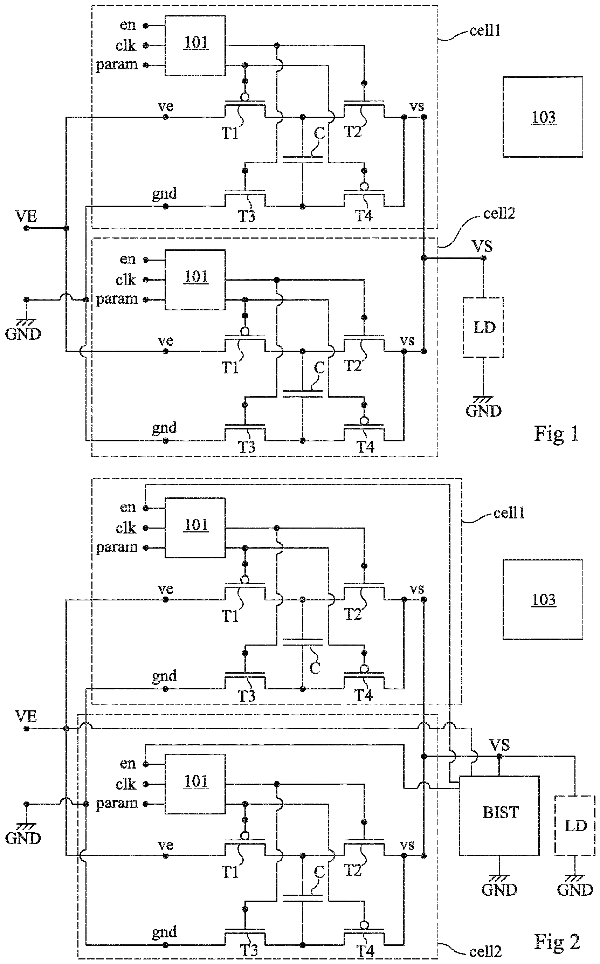

La figure 1 est un schéma électrique d'un exemple d'un convertisseur DC-DC multi-cellules.

Dans l'exemple représenté, le convertisseur comprend deux cellules élémentaires de conversion DC-DC cell1 et cell2 identiques ou similaires, connectées en parallèle. En pratique, le convertisseur peut comprendre plus de deux cellules élémentaires connectées en parallèle et/ou en série, par exemple 10 à 100 cellules élémentaires. Les cellules élémentaires sont par exemple disposées en matrice selon des lignes et des colonnes.

Dans l'exemple de la figure 1, chaque cellule élémentaire est une cellule à pompe de charge adaptée à diviser par un facteur deux une tension d'entrée.

Chaque cellule élémentaire de conversion comprend un noeud ve d'application d'une tension d'entrée, un noeud vs de fourniture d'une tension de sortie, et un noeud de référence gnd (la tension d'entrée étant appliquée entre le noeud ve et le noeud gnd, et la tension de sortie étant délivrée entre le noeud vs et le noeud gnd).

Les noeuds d'entrée ve de toutes les cellules du convertisseur sont connectés à un même noeud VE d'application d'une tension d'entrée du convertisseur, les noeuds vs de toutes les cellules du convertisseur sont connectés à un même noeud VS de fourniture d'une tension de sortie du convertisseur, et les noeuds gnd de toutes les cellules du convertisseur sont connectés à un même noeud GND de référence du convertisseur, par exemple la masse. La tension d'entrée du convertisseur est appliquée entre les noeuds VE et GND, et la tension de sortie du convertisseur est délivrée entre les noeuds VS et GND. Une charge LD à alimenter peut être connectée entre les noeuds VS et GND du convertisseur.

Dans l'exemple représenté, chaque cellule élémentaire de conversion comprend une première branche comportant deux transistors T1 et T2 en série entre les noeuds ve et vs, une deuxième branche comportant deux transistors T3 et T4 en série entre les noeuds gnd et vs, et une capacité C reliant le point milieu de l'association en série des transistors T1 et T2 au point milieu de l'association en série des transistors T3 et T4. Dans l'exemple représenté, les transistors T1 et T4 sont des transistors MOS à canal P, et les transistors T2 et T3 sont des transistors MOS à canal N. Les noeuds de conduction (source/drain) du transistor T1 sont reliés respectivement au noeud ve et à une première électrode de la capacité C, les noeuds de conduction du transistor T2 sont reliés respectivement à la première électrode de la capacité C et au noeud vs, les noeuds de conduction du transistor T3 sont reliés respectivement au noeud gnd et à la deuxième électrode de la capacité C, et les noeuds de conduction du transistor T4 sont reliés respectivement à la deuxième électrode de la capacité C et au noeud vs.

Chaque cellule élémentaire de conversion comprend en outre un circuit de contrôle interne 101 adapté à commander les transistors T1, T2, T3 et T4. Les transistors T1, T2, T3 et T4 sont utilisés en commutateurs, c'est-à-dire qu'ils peuvent être commandés soit à l'état passant, soit à l'état bloqué. Dans l'exemple représenté, les grilles de commande des transistors T1 et T4 sont reliées à un même premier noeud de sortie du circuit 101, et les grilles de commande des transistors T2 et T3 sont reliées à un même deuxième noeud de sortie du circuit 101. Les transistors T1 et T4 d'une part, et T2 et T3 d'autre part, sont donc commandés simultanément à l'état ouvert ou fermé.

Le circuit 101 comprend un noeud en d'application d'un signal binaire d'activation/désactivation de la cellule. A titre d'exemple, lorsque la cellule est commandée à l'état désactivé via son noeud en, le circuit 101 de la cellule maintient les quatre transistors T1, T2, T3 et T4 de la cellule à l'état ouvert, de sorte que la cellule ne participe plus à la fourniture de la tension de sortie du convertisseur.

Le circuit 101 comprend en outre un noeud clk d'application d'un signal d'horloge permettant de cadencer le rythme des transferts des charges de l'entrée vers la sortie de la cellule, via la capacité C.

De plus, le circuit 101 comprend une entrée param d'application d'un signal de paramétrage de la cellule, sur un ou plusieurs bits, permettant notamment la connexion en série et/ou en parallèle entre les différentes cellules.

Les noeuds en, clk et param des circuits de contrôle 101 des différentes cellules élémentaires de conversion sont reliés à un circuit de contrôle global 103 commun à toutes les cellules de la matrice.

En fonctionnement, chaque cellule élémentaire du convertisseur peut être commandée par son circuit de contrôle 101 alternativement dans un premier état dans lequel les transistors T1 et T4 sont passants et les transistors T2 et T3 sont bloqués, et dans un deuxième état dans lequel les transistors T2 et T3 sont passants et les transistors T1 et T4 sont bloqués. La cellule peut être commandée périodiquement alternativement dans le premier état et dans le deuxième état, par exemple avec un rapport cyclique de l'ordre de 0,5, à une fréquence fixée par le signal d'horloge appliqué sur le noeud clk de la cellule. En régime établi, la tension moyenne de sortie délivrée par la cellule est alors sensiblement égale à la moitié de la tension d'entrée de la cellule.

Les différentes cellules du convertisseur reçoivent par exemple le même signal d'horloge, mais avec un déphasage entre deux cellules successives du convertisseur, par exemple un déphasage de l'ordre de T_{clk}/N, T_{clk} étant la période du signal d'horloge et N étant le nombre de cellules du convertisseur (N=2 dans l'exemple simplifié représenté en figure 1). Les cellules élémentaires du convertisseur sont alors commandées sensiblement de la même manière, mais avec un décalage temporel entre les phases de commande des différentes cellules respectivement dans le premier état et dans le deuxième état. Un avantage de ce mode de commande est qu'il permet de limiter les oscillations de la tension de sortie du convertisseur. Les modes de réalisation décrits ne se limitent toutefois pas à ce mode de commande particulier. A titre de variante, les signaux d'horloge reçus par les différentes cellules du convertisseur peuvent être identiques et en phase.

En fonction des besoins de l'application, le circuit de contrôle global 103 peut commander la désactivation de certaines cellules (via leur noeud en), par exemple pour limiter la consommation du convertisseur si la puissance requise par l'application ne nécessite pas d'utiliser toutes les cellules élémentaires.

Le circuit de contrôle global 103 peut en outre contrôler le paramétrage des cellules (via leurs entrées param), par exemple pour modifier le ratio entre la tension d'entrée et la tension de sortie, par exemple en jouant sur le rapport cyclique entre les phases de commande des cellules respectivement dans le premier état et dans le deuxième état et/ou sur la fréquence de commutation et/ou sur les connexions entre les différentes cellules.

Un problème qui peut se poser dans un convertisseur multi-cellules du type décrit ci-dessus est que, en cas de défaillance d'une ou plusieurs cellules élémentaires, par exemple si les électrodes de la capacité d'une cellule élémentaire entrent en court-circuit dans l'exemple de la figure 1, des dysfonctionnements affectant l'ensemble du convertisseur peuvent se produire. En particulier, les performances du convertisseur, et notamment son rendement, peuvent être réduites considérablement. On peut aussi observer une augmentation significative de l'amplitude des oscillations de la tension de sortie du convertisseur.

Ce problème se pose tout particulièrement dans le cas où les cellules élémentaires de conversion sont intégrées sur une même puce de circuit intégré, par exemple une puce formée dans et sur un substrat de silicium. En effet, dans ce cas, la couche diélectrique séparant les deux électrodes de la capacité C dans chaque cellule élémentaire peut être relativement mince, par exemple comprise entre 1 et 10 nm d'épaisseur. Les capacités C sont alors sujettes à des dispersions de fabrication pouvant conduire, dans certains cas, à un court-circuit entre les électrodes. Un défaut d'une seule cellule élémentaire peut alors rendre inutilisable l'ensemble du convertisseur.

Plus généralement, les modes de réalisation décrits ci-après sont applicables à tout convertisseur DC-DC multi-cellules, intégré ou non et comportant ou non des capacités, dans lequel des composants des cellules élémentaires de conversion (capacités, inductances, transistors, etc.) sont susceptibles de dysfonctionner.

Selon un aspect d'un mode de réalisation, on prévoit un convertisseur DC-DC multi-cellules comportant un circuit de diagnostic adapté à tester individuellement les cellules élémentaires de conversion pour détecter d'éventuelles cellules défectueuses, à désactiver les cellules défectueuses, et à mémoriser l'emplacement des cellules défectueuses.

A titre d'exemple, le circuit de diagnostic est adapté à tester successivement les différentes cellules élémentaires au démarrage du convertisseur. Alternativement ou de façon complémentaire, le circuit de diagnostic peut tester les différentes cellules élémentaires pendant le fonctionnement du convertisseur, par exemple lors de phases de diagnostic répétées périodiquement. La mémorisation des emplacements des cellules défectueuses par le circuit de diagnostic permet, à chaque démarrage du convertisseur, de désactiver les cellules qui ont déjà été identifiées comme défectueuses, sans avoir à les tester à nouveau.

La figure 2 est un schéma électrique d'un exemple d'un mode de réalisation d'un convertisseur DC-DC multi-cellules.

Le convertisseur de la figure 2 comprend les mêmes éléments que le convertisseur de la figure 1, agencés sensiblement de la même manière. Ces éléments ne seront pas détaillés à nouveau.

Le convertisseur de la figure 2 comprend en outre un circuit de diagnostic BIST connecté entre les bornes VS et GND du convertisseur, en parallèle de la charge LD, et relié aux différentes cellules élémentaires de conversion du convertisseur. Le circuit de diagnostic BIST est en outre connecté à la borne d'entrée VE du convertisseur.

Dans l'exemple représenté, chaque cellule élémentaire de conversion a son noeud d'activation/désactivation en relié à un noeud de sortie du circuit de diagnostic BIST. Ainsi, le circuit de diagnostic BIST est adapté à activer/désactiver individuellement les différentes cellules élémentaires du convertisseur.

Lors d'une phase de diagnostic d'une cellule élémentaire de conversion, le circuit de diagnostic BIST peut activer individuellement cette cellule via son noeud d'activation/désactivation en, et désactiver toutes les autres cellules du convertisseur DC-DC via leurs noeuds en respectifs.

Le diagnostic de la cellule activée peut par exemple consister à faire fonctionner la cellule, puis à vérifier, en régime établi, que le ratio entre la tension de sortie VS et la tension d'entrée VE du convertisseur DC-DC correspond bien au ratio attendu pour la cellule, à une marge de tolérance près. A titre d'exemple, le circuit de diagnostic peut déterminer si la tension de sortie VS du convertisseur est égale, à plus ou moins dix pourcents près, à r*VE, où r est le ratio de conversion théorique de la cellule testée. Si oui, la cellule peut être considérée saine, et si non, la cellule peut être considérée défectueuse.

Alternativement ou de façon complémentaire, d'autres tests de santé peuvent être réalisés pour déterminer si les cellules sont saines ou défectueuses. A titre d'exemple, le circuit de diagnostic BIST peut mettre en oeuvre une mesure de rendement de conversion, et/ou une mesure des oscillations de la tension de sortie du convertisseur, et déterminer si les valeurs mesurées sont conformes au fonctionnement attendu de la cellule.

Les cellules élémentaires du convertisseur peuvent être testées séquentiellement, l'état de chaque cellule testée étant enregistré dans une mémoire du circuit de diagnostic BIST, de préférence une mémoire non volatile de façon à pouvoir conserver l'information d'état de santé des cellules lorsque le convertisseur DC-DC cesse d'être alimenté.

A l'issue de la phase de diagnostic du convertisseur, si des cellules défectueuses ont été identifiées, ces cellules peuvent être désactivées via leur noeud de contrôle en, le convertisseur continuant à fonctionner avec les autres cellules.

Selon une variante de réalisation, le diagnostic du convertisseur peut être réalisé par recherche dichotomique d'éventuelles cellules élémentaires défectueuses. A titre d'exemple l'ensemble des cellules élémentaires du convertisseur peut dans un premier temps être activé par le circuit de diagnostic. Le circuit de diagnostic détermine alors si le convertisseur se comporte de la manière attendue. Si oui, le circuit de diagnostic peut considérer que toutes les cellules élémentaires activées sont saines, et interrompre le diagnostic. Si non, le circuit de diagnostic peut désactiver la moitié des cellules, et réitérer le test. Si le comportement des cellules activées est conforme au comportement attendu, le circuit de diagnostic peut considérer que les cellules activées sont saines, et que la ou les cellules défectueuses se trouvent dans l'autre moitié du convertisseur. Par recherche dichotomique, le circuit de diagnostic peut ainsi identifier la ou les cellules défectueuses sans avoir à tester individuellement chacune des cellules.

Lorsqu'une ou plusieurs cellules défectueuses sont désactivées, les performances du convertisseur DC-DC peuvent être légèrement diminuées par rapport à un convertisseur dans lequel toutes les cellules sont saines et actives. Les performances obtenues restent toutefois très nettement supérieures aux performances obtenues lorsque des cellules sont défectueuses et ne sont pas désactivées. A titre d'exemple illustratif, les inventeurs ont réalisé des mesures pour un convertisseur DC-DC comportant 30 cellules élémentaires du type représenté aux figures 1 et 2 et présentant, lorsque toutes les cellules sont saines et activées, un rendement de 78% et un taux d'oscillation de sortie de 0,3%. En l'absence du circuit de diagnostic de la figure 2, la mise en défaut (court-circuit) d'une unique cellule élémentaire du convertisseur entraine une chute à 67% du rendement de conversion, et une augmentation à 2,2% du taux d'oscillation de sortie. La mise en défaut de deux cellules élémentaires entraine quant à elle une chute à 59% du rendement de conversion, et une augmentation à 4,3% du taux d'oscillation de sortie. En revanche, avec le circuit de diagnostic de la figure 2 permettant de désactiver les cellules défectueuses, on observe seulement une légère diminution à 77% du rendement et une légère augmentation à 0,9% du taux d'oscillation de sortie lorsqu'une ou deux cellules sont défectueuses.

Ainsi, le mode de réalisation proposé permet de pouvoir continuer à utiliser, sans dégradation significative des performances, des convertisseurs DC-DC multi-cellules présentant des cellules défectueuses.

Ce mode de réalisation est tout particulièrement avantageux dans le cas d'un convertisseur intégré dans et sur une puce semiconductrice, dans lequel la réparation ou le remplacement d'une cellule élémentaire défectueuse n'est pas possible. Dans ce cas, le circuit de diagnostic BIST est par exemple intégré sur la même puce semiconductrice que les cellules élémentaires et le circuit de contrôle 103 du convertisseur.

Dans le cas d'un convertisseur DC-DC multi-cellules dans lequel les différentes cellules élémentaires de conversion reçoivent des signaux d'horloge déphasés, on peut prévoir, lorsqu'une ou plusieurs cellules élémentaires de conversion sont diagnostiquées défectueuses et désactivées par le circuit de diagnostic BIST, de reconfigurer les déphasages des signaux d'horloge appliqués aux cellules restantes (saines) pour tenir compte du fait que des cellules ont été désactivées. Par exemple, le circuit de contrôle global 103 peut reconfigurer les déphasages de façon que ces derniers soient sensiblement équi-répartis, c'est-à-dire de façon que les N-N_{def} signaux d'horloge reçus par les N-N_{def} cellules encore actives (N étant le nombre total de cellules du convertisseur et N_{def} étant le nombre de cellules défectueuses désactivées) soient déphasés deux à deux d'environ T_{clk}/(N-N_{def}), T_{clk} étant la période du signal d'horloge. Ceci permet avantageusement de minimiser les oscillations de sortie du convertisseur.

Lors des phases de diagnostic, le circuit de diagnostic BIST peut déconnecter la charge LD destinée à être alimentée par le convertisseur, les cellules étant alors testées à vide. A titre de variante, les cellules peuvent être testées en maintenant la charge LD connectée en sortie du convertisseur. A titre de variante, le circuit de diagnostic BIST peut inclure une charge de diagnostic (non représentée), par exemple une résistance de diagnostic, connectée entre les bornes VS et GND uniquement lors des phases de diagnostic (la charge LD pouvant alors être déconnectée ou maintenue connectée). La prévision d'une telle charge de diagnostic permet de discriminer plus facilement les cellules défectueuses des cellules saines, notamment lorsque les caractéristiques de la charge LD ne sont pas connues de façon certaine.

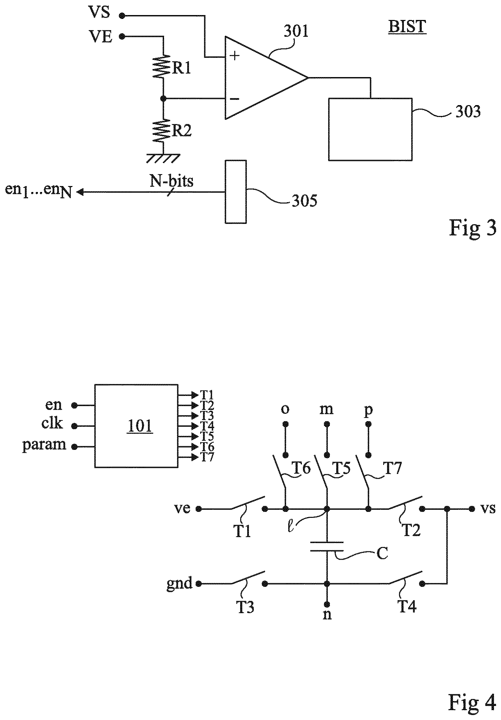

La figure 3 est un schéma électrique d'un exemple de réalisation du circuit de diagnostic BIST du convertisseur de la figure 2.

Dans l'exemple représenté, le circuit BIST comprend un comparateur 301 dont une première entrée (+) est reliée à la borne VS, et dont une deuxième entrée (-) est reliée au point milieu d'un pont diviseur de tension comprenant deux résistances R1 et R2 en série entre la borne VE et la borne GND. Les résistances R1 et R2 sont choisies de façon que la tension appliquée sur la deuxième entrée (-) du comparateur 301 soit égale à r*(1-m)*VE, où r est le ratio de conversion attendu d'une cellule élémentaire de conversion, et m est une marge de tolérance, par exemple de l'ordre de 10%. Ainsi, si la tension VS est supérieure à la tension r*(1-m)*VE, la sortie du comparateur est à un premier état, signifiant que la cellule testée est saine, et si la tension VS est inférieure à la tension r*(1-m)*VE, le comparateur est à un second état, signifiant que la cellule testée est défectueuse.

La sortie du comparateur 301 est reliée à un circuit de mémorisation 303 comprenant par exemple un emplacement mémoire par cellule élémentaire du convertisseur. Le circuit 303 est adapté à enregistrer, pour chaque cellule testée, le résultat du test dans l'emplacement mémoire associé à la cellule.

Le circuit BIST comprend en outre un circuit de sélection 305 permettant d'activer individuellement les différentes cellules élémentaires de conversion en vue de tester leur tension de sortie.

Dans l'exemple de la figure 3, le comparateur 301 peut avantageusement être utilisé en dehors des phases de diagnostic, pour réaliser d'autres fonctions, par exemple pour mettre en oeuvre une fonction de régulation du convertisseur, comprenant l'asservissement d'un ou plusieurs paramètres du convertisseur sur la tension mesurée en sortie du convertisseur.

La figure 4 est un schéma électrique d'un autre exemple d'une cellule élémentaire de conversion d'un convertisseur DC-DC multi-cellules selon un mode de réalisation.

La cellule élémentaire de la figure 4 comprend, comme dans les exemples des figures 1 et 2, un noeud ve d'application d'une tension d'entrée, un noeud vs de fourniture d'une tension de sortie, un noeud de référence gnd, une première branche comportant deux commutateurs T1 et T2 en série entre les noeuds ve et vs, une deuxième branche comportant deux commutateurs T3 et T4 en série entre les noeuds gnd et vs, et une capacité C reliant un noeud commun 1 entre les commutateurs T1 et T2 à un noeud commun n entre les commutateurs T3 et T4.

Dans l'exemple de la figure 4, la cellule élémentaire comprend en outre un commutateur T5 reliant le noeud 1 à un noeud de connexion m de la cellule, un commutateur T6 reliant le noeud 1 à un noeud de connexion o de la cellule, et un commutateur T7 reliant le noeud 1 à un noeud de connexion p de la cellule. Les commutateurs T5, T6, T7 sont par exemple des transistors MOS.

La cellule élémentaire de conversion de la figure 4 comprend en outre un circuit de contrôle interne 101 adapté à commander les commutateurs T1, T2, T3, T4, T5, T6 et T7 de la cellule.

Le circuit 101 comprend un noeud en d'application d'un signal binaire d'activation/désactivation de la cellule. A titre d'exemple, lorsque la cellule est commandée à l'état désactivé via son noeud en, le circuit 101 de la cellule maintient les sept commutateurs T1, T2, T3, T4, T5, T6, T7 de la cellule à l'état ouvert, de sorte que la cellule ne participe plus à la fourniture de la tension de sortie du convertisseur.

Le circuit 101 comprend en outre un noeud clk d'application d'un signal d'horloge permettant de cadencer la commande des commutateurs T1, T2, T3, T4, T5, T6 et T7 de la cellule.

De plus, le circuit 101 comprend une entrée param d'application d'un signal de paramétrage de la cellule, sur un ou plusieurs bits, permettant de définir la séquence de commande des commutateurs T1, T2, T3, T4, T5, T6, T7 de la cellule, notamment pour paramétrer le mode de connexion en série et/ou en parallèle entre les différentes cellules élémentaires du convertisseur, et, le cas échéant, le mode de fonctionnement du convertisseur.

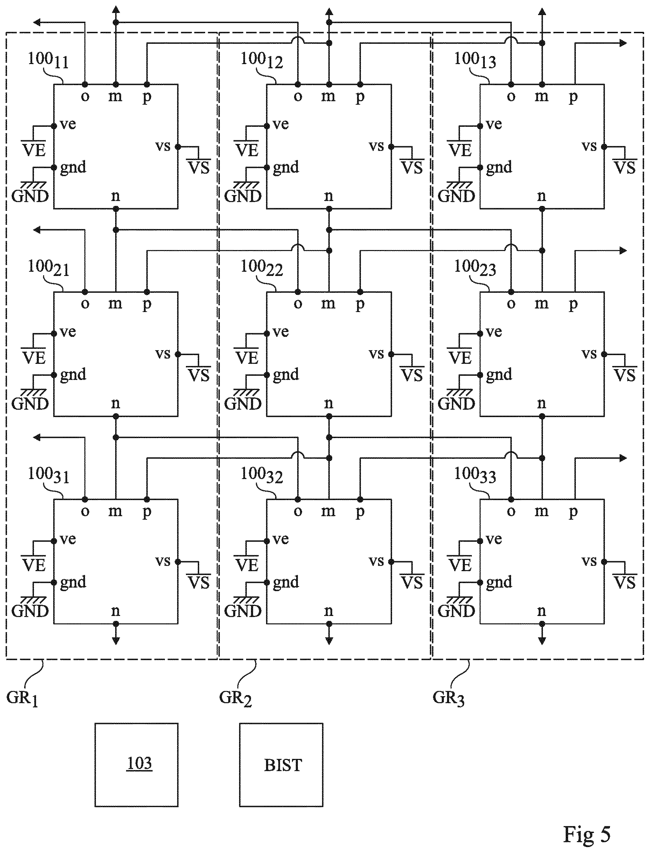

La figure 5 est un schéma électrique simplifié d'un exemple d'un mode de réalisation d'un convertisseur DC-DC multi-cellules. Le convertisseur de la figure 5 comprend une pluralité de cellules élémentaires de conversion 100ᵢⱼ identiques ou similaires à la cellule de la figure 4. Les cellules 100ᵢⱼ sont disposées en matrice selon des lignes et des colonnes, les indices i et j désignant respectivement le rang de la ligne et le rang de la colonne auxquelles appartient une cellule, avec i entier allant de 1 à M et j entier allant de 1 à N, M et N étant des entiers désignant respectivement le nombre de lignes et le nombre de colonnes de la matrice de cellules élémentaires. Dans l'exemple représenté, le convertisseur comprend M=3 lignes et N=3 colonnes. Les modes de réalisation décrits ne se limitent toutefois pas à ce cas particulier.

Par souci de simplification, les cellules élémentaires 100ᵢⱼ ne sont pas détaillées sur la figure 5. Seuls les noeuds de connexion ve, vs, gnd, m, n, o et p des cellules 100ᵢⱼ sont représentés. Dans l'exemple de la figure 5, les cellules élémentaires du convertisseur sont toutes connectées en parallèle via leurs noeuds ve, vs et gnd. Plus particulièrement, les noeuds d'entrée ve de toutes les cellules du convertisseur sont connectés à un même noeud VE d'application d'une tension d'entrée du convertisseur, les noeuds vs de toutes les cellules du convertisseur sont connectés à un même noeud VS de fourniture d'une tension de sortie du convertisseur, et les noeuds gnd de toutes les cellules du convertisseur sont connectés à un même noeud GND de référence du convertisseur, par exemple la masse. La tension d'entrée du convertisseur est appliquée entre les noeuds VE et GND, et la tension de sortie du convertisseur est délivrée entre les noeuds VS et GND. Une charge à alimenter (non représentée sur la figure 5) peut être connectée entre les noeuds VS et GND du convertisseur.

Dans l'exemple de la figure 5, les cellules élémentaires voisines du convertisseur sont en outre interconnectées via leurs noeuds de connexion m, n, o et p. Plus particulièrement, chaque cellule élémentaire 100ᵢⱼ (à l'exception des cellules de la première ligne de la matrice) a son noeud m connecté au noeud n de la cellule 100ᵢ₋₁ⱼ. De plus, chaque cellule élémentaire 100ᵢⱼ (à l'exception des cellules de la première colonne de la matrice) a son noeud o connecté au noeud m de la cellule 100ᵢⱼ₋₁. En outre, chaque cellule élémentaire 100ᵢⱼ (à l'exception des cellules de la dernière colonne de la matrice) a son noeud p connecté au noeud m de la cellule 100ᵢⱼ₊₁.

Les noeuds en, clk et param (non visibles sur la figure 5) des circuits de contrôle 101 des différentes cellules élémentaires de conversion sont reliés à un même circuit de contrôle global 103 commun à toutes les cellules de la matrice.

Les différentes cellules du convertisseur reçoivent par exemple le même signal d'horloge, avec ou sans déphasage entre les différentes cellules du convertisseur.

En fonction des besoins de l'application, le circuit de contrôle global 103 peut commander la désactivation de certaines cellules (via leur noeud en), par exemple pour limiter la consommation du convertisseur si la puissance requise par l'application ne nécessite pas d'utiliser toutes les cellules élémentaires.

Le circuit de contrôle global 103 peut en outre contrôler le paramétrage des cellules (via leurs entrées param) en fonction du mode de fonctionnement souhaité du convertisseur, par exemple pour modifier le ratio entre la tension d'entrée et la tension de sortie du convertisseur en jouant sur les modes d'interconnexion entre les différentes cellules.

Selon un premier mode de fonctionnement, les interrupteurs T5, T6 et T7 des cellules élémentaires sont maintenus ouverts, et chaque cellule élémentaire active du convertisseur est commandée par son circuit de contrôle 101 alternativement dans un premier état dans lequel les interrupteurs T1 et T4 sont fermés et les interrupteurs T2 et T3 sont ouverts, et dans un deuxième état dans lequel les interrupteurs T1 et T4 sont ouverts et les interrupteurs T2 et T3 sont fermés. Chaque cellule est par exemple commandée périodiquement alternativement dans le premier état et dans le deuxième état, par exemple avec un rapport cyclique de l'ordre de 0,5, à une fréquence fixée par le signal d'horloge appliqué sur le noeud clk de la cellule. Le comportement du convertisseur est alors similaire à celui des convertisseurs des figures 1 et 2. En régime établi, la tension moyenne de sortie délivrée par le convertisseur est sensiblement égale à la moitié de la tension d'entrée du convertisseur.

Selon un deuxième mode de fonctionnement, pendant au moins une phase de fonctionnement du convertisseur répétée périodiquement, les cellules élémentaires actives du convertisseur sont reliées par groupes d'au moins deux cellules élémentaires voisines via leurs interrupteurs T5, T6 et/ou T7, de manière à définir un ratio de conversion différent de 0,5 entre la tension de sortie et la tension d'entrée du convertisseur.

A titre d'exemple illustratif, les cellules élémentaires 100ᵢⱼ sont associées par groupes de trois cellules élémentaires successives d'une même colonne de la matrice. Par exemple, dans le convertisseur de la figure 5, les cellules élémentaires 100₁₁, 100₂₁, 100₃₁, de la colonne de rang j=1, définissent un premier groupe GR₁ de trois cellules liées, les cellules élémentaires 100₁₂, 100₂₂, 100₃₂, de la colonne de rang j=2 définissent un deuxième groupe GR₂ de trois cellules liées, et les cellules élémentaires 100₁₃, 100₂₃, 100₃₃, de la colonne de rang j=3 définissent un troisième groupe GR₃ de trois cellules liées. Dans chaque groupe GRⱼ, les interrupteurs T6 et T7 des cellules élémentaires du groupe sont maintenus ouverts. De plus, l'interrupteur T5 de la cellule élémentaire de position 1 dans le groupe (c'est-à-dire de rang i=1 dans cet exemple) est maintenu ouvert. Chaque groupe GRⱼ est commandé, par l'intermédiaire des circuits de contrôle 101 des cellules élémentaires 100ᵢⱼ du groupe, alternativement :
dans un premier état dans lequel les interrupteurs T1 de la cellule de position 1 dans le groupe, T5 des cellules de position 2 et 3 dans le groupe (c'est-à-dire de rangs i=2 et i=3 dans cet exemple), et T4 de la cellule de position 3 dans le groupe, sont fermés, et les interrupteurs T1 des cellules de position 2 et 3 dans le groupe, T2 et T3 des cellules de position 1, 2 et 3 dans le groupe, et T4 des cellules de position 1 et 2 dans le groupe, sont ouverts ; et
dans un deuxième état dans lequel les interrupteurs T2 et T3 des cellules de position 1, 2 et 3 dans le groupe sont fermés, et les interrupteurs T5 des cellules de position 2 et 3 dans le groupe, et T1 et T4 des cellules de position 1, 2 et 3 dans le groupe, sont ouverts.

En d'autres termes, chaque groupe GRⱼ est commandé, par l'intermédiaire des circuits de contrôle 101 des cellules élémentaires 100ᵢⱼ du groupe, alternativement dans un premier état dans lequel les capacités C des cellules du groupe sont connectées en série entre les noeuds VE et VS du convertisseur, et, dans un deuxième état dans lequel les capacités C des cellules du groupe sont connectées en parallèle entre les noeuds VS et GND du convertisseur.

Chaque groupe GRᵢ est par exemple commandé périodiquement alternativement dans le premier état et dans le deuxième état, par exemple avec un rapport cyclique de l'ordre de 0,5, à une fréquence fixée par le signal d'horloge appliqué sur les noeuds clk des cellules du groupe. En régime établi, la tension moyenne de sortie délivrée par le convertisseur est alors sensiblement égale au quart de la tension d'entrée du convertisseur.

Plus généralement, en jouant sur le nombre de cellules voisines dans chaque groupe élémentaire, et sur le schéma d'interconnexion des cellules de chaque groupe élémentaire dans les premier et deuxième états, d'autres ratios de conversion entre la tension d'entrée et la tension de sortie du convertisseur peuvent être obtenus.

Le paramétrage du mode de fonctionnement du convertisseur peut être réalisé par le circuit de contrôle global 103 qui génère, pour chaque cellule élémentaire active 100ᵢⱼ du convertisseur, un signal de paramétrage appliqué sur l'entrée param de la cellule. Le signal de paramétrage comprend par exemple un ou plusieurs bits fixant le ratio de conversion souhaité, et, le cas échéant, la position de la cellule dans un groupe de cellules voisines coopérant pour mettre en oeuvre une fonction de conversion déterminée. En fonction du signal de paramétrage appliqué sur son entrée param, le circuit de contrôle interne 101 de chaque cellule élémentaire applique une séquence de commande appropriée aux interrupteurs T1, T2, T3, T4, T5, T6, T7 de la cellule.

Le convertisseur de la figure 5 comprend en outre un circuit de diagnostic BIST adapté à tester individuellement les cellules élémentaires de conversion 100ᵢⱼ pour détecter d'éventuelles cellules défectueuses. Le circuit de diagnostic BIST de la figure 5 est par exemple identique ou similaire, dans son agencement et dans son fonctionnement, au circuit de diagnostic BIST de la figure 2. En particulier, le circuit BIST est adapté, à l'issue d'une phase de diagnostic, à désactiver les cellules défectueuses et à mémoriser leur emplacement.

Selon le mode de fonctionnement considéré, si des cellules défectueuses sont détectées pendant une phase de diagnostic, le circuit de contrôle global 103 peut, à l'issue de la phase de diagnostic, modifier le paramétrage des cellules actives restantes de façon à modifier la séquence de commande des interrupteurs de ces cellules.

En particulier, de même que dans l'exemple de la figure 2, si les différentes cellules élémentaires de conversion reçoivent des signaux d'horloge déphasés, on peut prévoir, lorsqu'une ou plusieurs cellules élémentaires de conversion sont diagnostiquées défectueuses et désactivées par le circuit de diagnostic BIST, de reconfigurer les déphasages entre les séquences de commande appliquées aux cellules actives restantes (ce qui revient à modifier les séquences de commande appliquées aux interrupteurs des cellules actives restantes) pour tenir compte du fait que des cellules ont été désactivées, de façon notamment à rééquilibrer les déphasages pour minimiser les oscillations de sortie du convertisseur.

En outre, lorsque les cellules élémentaires sont reliées en groupes élémentaires de plusieurs cellules voisines pour mettre en oeuvre une fonction de conversion particulière, comme par exemple dans le deuxième mode de fonctionnement décrit ci-dessus en relation avec la figure 5, on peut prévoir, lorsque des cellules élémentaires sont diagnostiquées défectueuses dans plusieurs groupes élémentaires et sont désactivées par le circuit de diagnostic BIST, de modifier le paramétrage des cellules actives restantes, de façon à recréer, lorsque cela est possible, un ou plusieurs groupes élémentaires à partir des cellules saines restantes des groupes défectueux. A titre d'exemple illustratif, dans l'exemple de la figure 5, si les cellules 100₂₁ et 100₁₂ sont diagnostiquées défectueuses, plutôt que de désactiver l'ensemble des deux groupes élémentaires GR₁ et GR₂ du convertisseur, on peut prévoir de reconfigurer les cellules 100₁₁, 100₂₂ et 100₃₁ en un nouveau groupe élémentaire dans lequel, dans le premier état, la connexion en série des capacités C des cellules du groupe est réalisée par l'intermédiaire de l'interrupteur T6 de la cellule de position 2 dans le nouveau groupe, à savoir la cellule 100₂₂, et par l'intermédiaire de l'interrupteur T7 de la cellule de position 3 dans le nouveau groupe, à savoir la cellule 100₃₁. En pratique, ceci revient à reconfigurer les séquences de commande appliquées aux interrupteurs des cellules 100₁₁, 100₂₂ et 100₃₁. Les cellules 100₁₂, 100₂₁ et 100₃₂ peuvent quant à elles être désactivées. A titre d'exemple, pour choisir quelles cellules associer en un nouveau groupe élémentaire lors d'une telle reconfiguration du convertisseur, le circuit de contrôle global 103 peut comporter une mémoire stockant des tables de configuration permettant d'identifier, pour chaque mode de fonctionnement du convertisseur et pour chaque cellule élémentaire du convertisseur, la ou les cellules élémentaires voisines pouvant être combinées avec la cellule considérée pour former un groupe élémentaire adapté à mettre en oeuvre la fonction de conversion souhaitée. A titre de variante, le circuit de contrôle global 103 peut comporter des circuits logiques adaptés à mettre en oeuvre un algorithme de recherche de cellules saines voisines susceptibles d'être combinées en un nouveau groupe élémentaire adapté à mettre en oeuvre la fonction de conversion souhaitée.

Des modes de réalisation particuliers ont été décrits. Diverses variantes et modifications apparaîtront à l'homme de l'art.

En particulier, les modes de réalisation décrits ne se limitent pas à l'exemple de circuit de diagnostic décrit en relation avec la figure 3. L'homme du métier saura prévoir d'autres implémentations du circuit de diagnostic BIST permettant de mettre en oeuvre le fonctionnement recherché.

En outre, les modes de réalisation décrits ne se limitent pas aux exemples particuliers de cellules élémentaires de conversion illustrés par les figures 1, 2 et 4. Plus généralement, les modes de réalisation décrits s'appliquent à tout type de cellule élémentaire de conversion DC-DC comportant au moins un commutateur et un élément passif de stockage d'énergie, par exemple une capacité ou une inductance. A titre d'exemple, les cellules élémentaires peuvent être des cellules à pompe de charge capacitive réalisant une division ou une multiplication de la tension d'entrée. A titre de variante, les cellules élémentaires de conversion peuvent être des cellules de conversion inductives. De plus, les modes de réalisation décrits ne se limitent pas au cas particulier où les commutateurs des cellules élémentaires de conversion sont des transistors MOS.

## Revendications

1. Convertisseur DC-DC comportant :
une pluralité de cellules de conversion (cell1, cell2 ; 100ᵢⱼ) connectées en parallèle et/ou en série, chaque cellule comportant au moins un commutateur (T1, T2, T3, T4 ; T5, T6, T7) et au moins un élément passif de stockage d'énergie (C) ;
un circuit de diagnostic (BIST) adapté à tester individuellement les cellules (cell1, cell2 ; 100ᵢⱼ) en vue de détecter d'éventuelles cellules défectueuses, à désactiver les cellules défectueuses, et à mémoriser l'emplacement des cellules défectueuses ; et
un circuit de contrôle global (103) adapté, lorsque des cellules sont désactivées par le circuit de diagnostic (BIST), à reconfigurer des séquences de commande appliquées aux commutateurs (T1, T2, T3, T4 ; T5, T6, T7) des cellules encore actives,
dans lequel :
chaque cellule comprend en outre un circuit interne (101) de contrôle dudit au moins un commutateur (T1, T2, T3, T4 ; T5, T6, T7) de la cellule, adapté à appliquer audit au moins un commutateur une séquence de commande fonction d'un signal de paramétrage (param) fourni au circuit de contrôle interne (101) par le circuit de contrôle global (103) du convertisseur ;
le circuit de contrôle global (103) est adapté à définir une pluralité de groupes élémentaires (GRⱼ) comportant chacun plusieurs cellules élémentaires (100ᵢⱼ) voisines, et à appliquer aux cellules élémentaires d'un même groupe des signaux de paramétrage (param) distincts de façon que l'ensemble des cellules élémentaires du groupe coopèrent pour mettre en oeuvre une fonction de conversion DC-DC déterminée ; et
le circuit de contrôle global (103) est adapté, lorsque des cellules défectueuses sont désactivées par le circuit de diagnostic (BIST), à reconfigurer les signaux de paramétrage (param) appliqués aux circuits de contrôle interne (101) des cellules (cell1, cell2 ; 100ᵢⱼ) encore actives de façon à redéfinir les groupes élémentaires (GRⱼ) du convertisseur.

2. Convertisseur selon la revendication 1, dans lequel, pour tester une cellule, le circuit de diagnostic (BIST) mesure la tension de sortie de la cellule et la compare à une tension de sortie attendue.

3. Convertisseur selon la revendication 1 ou 2, dans lequel, pour tester une cellule, le circuit de diagnostic (BIST) mesure le rendement de conversion de la cellule et le compare à un rendement de conversion attendu.

4. Convertisseur selon l'une quelconque des revendications 1 à 3, dans lequel, pour tester une cellule, le circuit de diagnostic (BIST) mesure le taux d'oscillation de sortie de la cellule, et le compare à un taux d'oscillation de sortie attendu.

5. Convertisseur selon l'une quelconque des revendications 1 à 4, dans lequel chaque cellule (cell1, cell2 ; 100ᵢⱼ) le circuit interne (101) de contrôle dudit au moins un commutateur (T1, T2, T3, T4 ; T5, T6, T7) de la cellule est cadencé par un signal d'horloge (clk) fourni par le circuit de contrôle global (103) du convertisseur.

6. Convertisseur selon la revendication 5, dans lequel les signaux d'horloge (clk) appliqués aux circuits de contrôle interne (101) des différentes cellules (cell1, cell2 ; 100ᵢⱼ) sont déphasés.

7. Convertisseur selon la revendication 6, dans lequel le circuit de contrôle global (103) est adapté, lorsque des cellules défectueuses sont désactivées par le circuit de diagnostic (BIST), à reconfigurer les déphasages des signaux d'horloge (clk) appliqués aux circuits de contrôle interne (101) des cellules (cell1, cell2 ; 100ᵢⱼ) encore actives.

8. Convertisseur selon l'une quelconque des revendications 1 à 7, dans lequel le circuit de diagnostic (BIST) comprend une mémoire non volatile (303).

9. Convertisseur selon l'une quelconque des revendications 1 à 8, dans lequel ledit au moins un élément de stockage d'énergie est une capacité (C) ou une inductance.

10. Convertisseur selon l'une quelconque des revendications 1 à 9, dans lequel ledit au moins un commutateur (T1, T2, T3, T4 ; T5, T6, T7) est un transistor MOS.

11. Convertisseur selon l'une quelconque des revendications 1 à 10, dans lequel chaque cellule (cell1, cell2) comprend une pompe de charge capacitive.

12. Convertisseur selon l'une quelconque des revendications 1 à 11, dans lequel lesdites cellules (cell1, cell2) et ledit circuit de diagnostic (BIST) sont intégrés dans une même puce semiconductrice.

## Patentansprüche

1. Ein DC/DC-Wandler oder -Konverter, der Folgendes aufweist:
eine Vielzahl von Umwandlungszellen (cell1, cell2; 100ᵢⱼ), die parallel und/oder in Reihe geschaltet sind, wobei jede Zelle wenigstens einen Schalter (T1, T2, T3, T4; T5, T6, T7) und wenigstens ein passives Energiespeicherelement (C) aufweist;
eine Diagnoseschaltung (BIST), die konfiguriert ist zum individuellen Testen der Zellen (cell1, cell2; 100ᵢⱼ) zum Detektieren möglicher defekter Zellen, zum Deaktivieren der defekten Zellen und zum Speichern des Ortes der defekten Zellen; und
eine allgemeine Steuerschaltung (103), die, wenn Zellen durch die Diagnoseschaltung (BIST) deaktiviert sind, geeignet ist, Steuersequenzen, die an die Schalter (T1, T2, T3, T4; T5, T6, T7) der Zellen, die noch aktiv sind, angelegt werden, zu rekonfigurieren,
wobei:
jede Zelle ferner eine interne Steuerschaltung (101) zum Steuerieren des wenigstens einen Schalters (T1, T2, T3, T4; T5, T6, T7) der Zelle aufweist, wobei die interne Schaltung geeignet ist, an den wenigstens einen Schalter eine Steuersequenz anzulegen, die von einem Parametrierungssignal (param) abhängt, das an die interne Steuerschaltung (101) der Zelle durch die allgemeine Steuerschaltung (103) des Konverters geliefert wird;
die allgemeine Steuerschaltung (103) konfiguriert ist zum Definieren einer Vielzahl von Elementargruppen (GRⱼ), die jede eine Vielzahl von benachbarten Elementarzellen (100ᵢⱼ) aufweist, und zum Anlegen unterschiedlicher Parametrierungssignale (param) an die Elementarzellen der gleichen Gruppe, so dass alle Elementarzellen in der Gruppe kooperieren, um eine bestimmte DC/DC-Umwandlungsfunktion zu implementieren; und
die allgemeine Steuerschaltung (103), wenn defekte Zellen durch die Diagnoseschaltung (BIST) deaktiviert sind, konfiguriert ist zum Rekonfigurieren der Parametrierungssignale (param), die an die internen Steuerschaltungen (101) der Zellen (cell1, cell2; 100ᵢⱼ), welche noch aktiv sind, angelegt werden, um die Elementargruppen (GRⱼ) des Wandlers zu redefinieren.

2. Wandler nach Anspruch 1, wobei zum Testen einer Zelle die Diagnoseschaltung (BIST) die Zellenausgangsspannung misst und mit einer erwarteten Ausgangsspannung vergleicht.

3. Wandler nach Anspruch 1 oder 2, wobei zum Testen einer Zelle die Diagnoseschaltung (BIST) die Umwandlungseffizienz der Zelle misst und mit einer erwarteten Umwandlungseffizienz vergleicht.

4. Wandler nach einem der Ansprüche 1 bis 3, wobei zum Testen einer Zelle die Diagnoseschaltung (BIST) die Ausgangsoszillationsrate der Zelle misst und mit einer erwarteten Ausgangsoszillationsrate vergleicht.

5. Wandler nach einem der Ansprüche 1 bis 4, wobei in jeder Zelle (cell1, cell2; 100ᵢⱼ) die interne Schaltung (101) wird zum Steuern des wenigstens einen Schalters (T1, T2, T3, T4; T5, T6, T7) der Zelle durch ein Taktsignal (clk), das von der Schaltung (103) zum allgemeinen Steuern des Wandlers geliefert wird, getaktet wird.

6. Wandler nach Anspruch 5, wobei die Taktsignale (clk), die an die internen Steuerschaltungen (101) der verschiedenen Zellen (cell1, cell2; 100ᵢⱼ) angelegt werden, phasenverschoben sind.

7. Wandler nach Anspruch 6, wobei die allgemeine Steuerschaltung (103), wenn defekte Zellen durch die Diagnoseschaltung (BIST) deaktiviert sind, konfiguriert ist zum Rekonfigurieren der Phasenverschiebungen der Taktsignale (clk), die an die internen Steuerschaltungen (101) der Zellen (cell1, cell2; 100ᵢⱼ), welche noch aktiv sind, angelegt werden.

8. Wandler nach einem der Ansprüche 1 bis 7, wobei die Diagnoseschaltung (BIST) einen nicht-flüchtigen Speicher (303) aufweist.

9. Wandler nach einem der Ansprüche 1 bis 8, wobei das wenigstens eine Energiespeicherelement ein Kondensator (C) oder eine Induktanz ist.

10. Wandler nach einem der Ansprüche 1 bis 9, wobei der wenigstens eine Schalter (T1, T2, T3, T4; T5, T6, T7) ein MOS-Transistor ist.

11. Wandler nach einem der Ansprüche 1 bis 10, wobei jede Zelle (cell1, cell2) eine kapazitive Ladungspumpe aufweist.

12. Wandler nach einem der Ansprüche 1 bis 11, wobei die Zellen (cell1, cell2) und die Diagnoseschaltung (BIST) in einem gleichen Halbleiterchip integriert sind.

## Claims

1. A DC/DC converter comprising:
a plurality of conversion cells (cell1, cell2; 100ᵢⱼ) connected in parallel and/or in series, each cell comprising at least one switch (T1, T2, T3, T4; T5, T6, T7) and at least one passive power storage element (C);
a diagnosis circuit (BIST) configured to individually test the cells (cell1, cell2; 100ᵢⱼ) to detect possible defective cells, to deactivate the defective cells, and to store the location of the defective cells; and
a general control circuit (103) capable, when cells are deactivated by the diagnosis circuit (BIST), of reconfiguring control sequences applied to the switches (T1, T2, T3, T4; T5, T6, T7) of the cells which are still active,
wherein:
each cell further comprises an internal control circuit (101) for controlling the at least one switch (T1, T2, T3, T4; T5, T6, T7) of the cell, the internal circuit being adapted to apply to said at least one switch a control sequence that depends on a parameterizing signal (param) provided to the internal control circuit (101) of the cell by the general control circuit (103) of the converter;
the general control circuit (103) is configured to define a plurality of elementary groups (GRⱼ) each comprising a plurality of neighboring elementary cells (100ᵢⱼ), and to apply to the elementary cells of a same group different parameterizing signals (param) so that all the elementary cells in the group cooperate to implement a determined DC/DC conversion function; and
the general control circuit (103) is configured, when defective cells are deactivated by the diagnosis circuit (BIST), to reconfigure the parameterizing signals (param) applied to the internal control circuits (101) of the cells (cell1, cell2; 100ᵢⱼ) which are still active in order to redefine the elementary groups (GRⱼ) of the converter.

2. The converter of claim 1, wherein, to test a cell, the diagnosis circuit (BIST) measures the cell output voltage and compares it with an expected output voltage.

3. The converter of claim 1 or 2, wherein, to test a cell, the diagnosis circuit (BIST) measures the conversion efficiency of the cell and compares it with an expected conversion efficiency.

4. The converter of any of claims 1 to 3, wherein, to test a cell, the diagnosis circuit (BIST) measures the output oscillation rate of the cell and compares it with an expected output oscillation rate.

5. The converter of any of claims 1 to 4, wherein, in each cell (cell1, cell2; 100ᵢⱼ) the internal circuit (101) for controlling said at least one switch (T1, T2, T3, T4; T5, T6, T7) of the cell is clocked by a clock signal (clk) provided by the circuit (103) for generally controlling the converter.

6. The converter of claim 5, wherein the clock signals (clk) applied to the internal control circuits (101) of the different cells (cell1, cell2; 100ᵢⱼ) are phase-shifted.

7. The converter of claim 6, wherein the general control circuit (103) is configured, when defective cells are deactivated by the diagnosis circuit (BIST), to reconfigure the phase shifts of the clock signals (clk) applied to the internal control circuits (101) of the cells (cell1, cell2; 100ᵢⱼ) which are still active.

8. The converter of any of claims 1 to 7, wherein the diagnosis circuit (BIST) comprises a non-volatile memory (303).

9. The converter of any of claims 1 to 8, wherein said at least one power storage element is a capacitor (C) or an inductance.

10. The converter of any of claims 1 to 9, wherein said at least one switch (T1, T2, T3, T4; T5, T6, T7) is a MOS transistor.

11. The converter of any of claims 1 to 10, wherein each cell (cell1, cell2) comprises a capacitive charge pump.

12. The converter of any of claims 1 to 11, wherein said cells (cell1, cell2) and said diagnosis circuit (BIST) are integrated in a same semiconductor chip.
